# EUROPEAN PATENT SPECIFICATION

(11) **EP 0 230 763 B1**
(45) Date of publication and mention of the grant of the patent: **27.01.1993**
(21) Application number: 86309930.5
(22) Date of filing: 18.12.1986
(51) Int. Cl.: A23G 1/00, A23G 1/20, A23G 1/10

(54) **Confectionary products**
Konditorwaren
Produits de confiserie

(30) Priority: 20.12.1985 JP 287222/85; 26.08.1986 JP 199607/86
(43) Date of publication of application: 05.08.1987
(73) Proprietor: MORINAGA & CO., LTD., Minato-ku Tokyo 108 (JP)
(72) Inventor: Hara, Jun, Meguro-ku Tokyo (JP)
(74) Representative: Crisp, David Norman

(56) References cited:
- BE-A- 688 058
- CH-A- 450 131
- DE-A- 2 034 433
- DE-A- 2 133 243
- FR-A- 831 591
- FR-A- 1 576 206
- FR-A- 2 085 065
- GB-A- 459 583
- US-A- 2 645 580
- US-A- 2 784 096
- Hacks chemical Dictionary,4th Edition,lgbg,page 202

## Description

The present invention relates to confectionery products containing chocolate and their preparation.

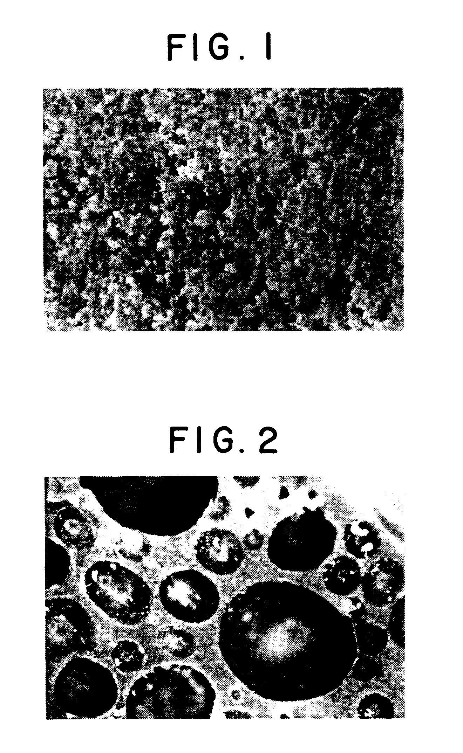

Most chocolates contain no gases such as air, but aerochocolates are an exception. They contain gas in order to impart to them a mild, light and creamy feel when they are eaten. Prior aerochocolates have such a texture that the chocolate forms a continuous phase and the gas forms the discontinuous phase in the form of numbers of gas bubbles, as shown in Figure 2 of the accompanying drawings. Such prior aerochocolates are manufactured by placing a tempered chocolate in a mould, cooling it under reduced pressure to spontaneously expand the gas contained in the chocolate, and finally solidifying the chocolate. Alternatively, they are manufactured by agitating a tempered chocolate to allow gas bubbles to be incorporated into the chocolate, then by cooling and solidifying the chocolate in a mould. The agitation may be effected under pressure.

As mentioned above, the texture of the prior aerochocolates is such that numbers of gas bubbles form a discontinuous phase dispersed in the chocolate, which forms a continuous phase. Because of this, an extra amount of chocolate is required. Such chocolate forms partitions by which gas is surrounded and shut out, and the aerochocolates having such a structure do not have a sufficiently light, mild and creamy feel in the mouth. The gas content in such aerochocolates cannot be increased, as the gas will escape from the chocolate.

Attempts have been made to increase the gas content by cooling the chocolate to increase its viscosity. However, such attempts turned out to be unsuccessful, as the thickness of the partitions of the aerochocolates so prepared is quite uneven and as the chocolate and gas form continuous and discontinuous phases respectively; such aerochocolates do not give a desired good feel in the mouth.

As a result of investigations of how aerochocolates having a high gas content and having a very light feel in the mouth may be prepared by agitating the chocolate with cooling and then expanding the chocolate under specified conditions, including temperature, pressure and apparent relative density, and that the aerochocolates prepared by solidifying the thus obtained chocolate give a light feel in the mouth, like that of fresh cream.

The present invention provides a process for manufacturing a confectionery product that comprises agitating molten chocolate while cooling it until its temperature is from 8 to 14^{o}C lower than the melting point of the fat contained in the chocolate and until its apparent relative density is from 1.1 to 0.7, with the inclusion of gas; and allowing the cooled chocolate to expand under a reduced pressure not exceeding 150 Torr, (20 kPa) thereby expanding it and forming gas and solid phases. The aerochocolates obtainable by this process, which constitute another aspect of the present invention, preferably have an apparent relative density of from 0.23 to 0.48.

In this specification, the term "chocolate" includes not only cocoa butter-based products such as chocolate, white chocolate and coloured chocolate, but also chocolate-like fat based confectionery material such as semi-chocolate containing fats other than cocoa butter.

In the accompanying drawings:-
Figure 1 is a photomicrograph (x 30), showing an enlarged sectional view of the aerochocolate obtained by Example 1 below.
Figure 2 is a photomicrograph (x 30), showing an enlarged sectional view of the aerochocolate of the prior art.

In order to obtain aerochocolates described above, the chocolate is melted at a temperature higher than melting point of the fat contained in the chocolate, which is then agitated, with cooling, thus enabling gas to be introduced into it. The purpose of the agitation is to allow the gas to be introduced into the chocolate. Since the gas bubbles should be as fine as possible, the agitation should be as vigorous as possible. The introduction of gas may be carried out, if necessary, by applying pressure. The agitation may be performed, for example, with a beater or OVA-mixer, with spontaneous intake of gas. It may also be performed with a batch or continuous aeration device that introduces gas as well as agitating and mixing, such as marshmallow beater, ice-cream freezer or Oaks-mixer.

Normally, air is used as the gas. However, other gases such as nitrogen or carbon dioxide which do not accelerate oxidation of fat may also be used.

It is necessary that the agitation be carried out with cooling. The cooling should be continued until the temperature of the chocolate is from 8 to 14^{o}C lower than the melting point of the fat contained in the chocolate. The gas content in the chocolate, the apparent relative density of which is around 1.25, should be increased until the apparent relative density of the chocolate containing the gas is in the range 1.1 to 0.7.

During cooling of the chocolate, it does not solidify immediately at the melting point of the fat contained in it but remains fluid for a certain time: that is to say, only a part of the fat solidifies upon cooling to make fine crystals, and this results in increase of the viscosity of the chocolate.

Under this condition, it tends to be easy to retain the gas in the chocolate. Excessive cooling results in excessively increase in viscosity of the chocolate, which can begin to solidify during the processing, as a result of which the desired properties of the aerochocolates may not be achieved.

When the total amount of the gas contained in the chocolate is too small and the apparent relative density of the chocolate is larger than 1.1, the gas in the aerochocolates is present in the form of numbers of bubbles as in prior aerochocolates.

On the other hand, when the total amount of the gas contained in the chocolate is too much and the apparent relative density of the chocolate is smaller than 0.7, during the following step under reduced pressure big bubbles are formed before the chocolate begins to solidify, resulting in the bursting of the bubbles and degasification. Even if such bursting of the bubbles and degasification do not take place, big cavities emerge in the chocolate or else there is separation of the chocolate and the gas phases, as a result of which, the fine granular chocolate does not form in one piece. Obviously, these defects greatly damage the commercial value of the products.

In the next step, the chocolate, which still maintains its fluidity, is placed in a mould or other vessel and subjected to expansion under a reduced pressure of 150 Torr (20 kPa) or lower.

It is important that, upon expansion under reduced pressure, the chocolate should begin to solidify when the apparent relative density of the chocolate reaches between 0.23 and 0.48. In order to achieve this, it is necessary to adjust the temperature of the chocolate, just after the stirring with cooling, to be from 8 to 14^{o}C lower than the melting point of the fat contained in it. For the same reason, the ambient temperature under reduced pressure should be adjusted appropriately.

The chocolate in the continuous phase becomes a fine granular conglomerate, as shown in Figure 1, which is an enlarged sectional view, if the expansion and the solidification are performed under the conditions mentioned above.

Where the apparent relative density of the aerochocolate is larger than 0.48, the gas is present discontinuously in the form of bubbles, as in the prior aerochocolates. Where the apparent relative density of the aerochocolate is smaller than 0.23, big cavities tend to emerge in the aerochocolate or the aerochocolate is too fragile to maintain the shape.

Where the temperature of the chocolate itself is higher than the temperature mentioned above, the solidification of the chocolate proceeds slowly and a part of bubbles contained it is escape.

Where the pressure is reduced above 150 Torr (20 kPa), aerochocolates of the prior art will be obtained.

### Example 1

A milk chocolate containing cocoa butter and as the fat, milk fat having a melting point of 33^{o}C was placed in a metallic vessel of an OVA-mixer. The chocolate was agitated to introduce air into it, while the vessel was cooled with cold water. The stirring was continued for about 6 minutes when the apparent relative density of the chocolate became 0.98 and its temperature reached 25.0^{o}C. The chocolate was then placed in a mould while it maintained the fluidity and the mould was placed in a vacuum chamber kept at 8 Torr (1 kPa) in order to allow the chocolate to expand. The ambient temperature under reduced pressure was 5.5^{o}C. The chocolate was then solidified, after the expansion, when its apparent relative density was 0.43. There was thus obtained an aerochocolate in which chocolate formed a fine granular conglomerate. The aerochocolate had a light and creamy touch in the mouth and was very delicious. Figure 1 is a photomicrograph which shows the sectional view enlarged by 30 times of the aerochocolate obtained in Example 1.

### Example 2

A chocolate containing cocoa butter as the only fat was placed in an ice cream freezer. The chocolate was stirred with cooling for 3 minutes while carbon dioxide gas was blown into it. At the end of this period, the chocolate contained numbers of fine bubbles. The apparent relative density of the chocolate was 1.01 and its temperature was 24.5^{o}C. The chocolate was then placed in a wafer shell of a "monaka", i.e. a bean-jam-filled wafer, and was then expanded at 5 Torr (0.7 kPa) and at 15^{o}C in a vacuum chamber. It was then solidified when the apparent relative density of the chocolate became 0.38. The aerochocolate thus produced has a texture similar to that obtained in Example 1 and it tasted light and creamy.

### Example 3

A chocolate tempered by a conventional method was placed in a mould and the excess of chocolate was removed by dripping. The chocolate was cooled and solidified into a chocolate shell, which was filled with another chocolate prepared as in Example 2. The whole chocolate was allowed to stand in a vacuum chamber at 7 Torr (0.9 kPa) and at 18^{o}C to complete expansion. The chocolate was then cooled when its apparent relative density became 0.40 to give an aerochocolate. The aerochocolate thus manufactured had substantially the same texture as that of the aerochocolate prepared in Example 1. The aerochocolate had a light and mild feel in the mouth, similar to a chocolate containing fresh cream.

### Example 4

A melted chocolate containing cocoa butter as the fat was fed into a continuous cooling aeration device composed of a cylinder fitted with an air intake and an agitator and capable of being cooled from outside.

The cooling and aeration were controlled so that the chocolate from the outlet had an apparent relative density of 1.05 and reached a temperature of 25.0^{o}C.

The chocolate so treated passed continuously out of the device and was charged to a mould by means of a depositor. The mould was then kept in a vacuum chamber and allowed to stand at 7 Torr (0.9 kPa) and at 15^{o}C to complete expansion. The chocolate was then solidified when its apparent relative density was 0.39. The aerochocolate had a texture substantially the same as that of the aerochocolate obtained in Example 1. The aerochocolate had a light touch and melted in the mouth quickly. It tasted very delicious and was creamy.

### Example 5

A melted chocolate containing cocoa butter as the fat was fed into the continuous cooling aeration device described in Example 4. The cooling and aeration were effected so that the chocolate flowing out of the outlet had an apparent relative density of 0.75 and temperature of 25^{o}C. The flowing chocolate was charged to a mould by means of a depositor. The mould was kept in a vacuum chamber maintained at 38 Torr (5.1 kPa) and at 15^{o}C to complete expansion. The chocolate was then solidified when its apparent relative density was 0.42. The aerochocolate thus produced has a texture substantially the same as that of the aerochocolate obtained in Example 1. The aerochocolate had a light touch and melted in the mouth quickly. It tasted very delicious and was creamy.

### Example 6

A chocolate containing cocoa butter only as the fat was fed in an ice cream freezer and stirred and cooled, while blowing into it nitrogen gas, until it had an apparent relative density of 0.73 and reached a temperature of 25.5^{o}C. At this stage, the chocolate contained numbers of fine bubbles. The chocolate was then sandwiched between two pieces of biscuit and allowed to stand in a vacuum chamber kept at 25 Torr (3.3 kPa) and at 15^{o}C to complete expansion. The aerochocolate thus prepared and sandwiched with the biscuits had an apparent relative density of 0.46. It had a texture substantially the same as that of the aerochocolate obtained in Example 1. The aerochocolate had a light feel in the mouth and was creamy.

### Example 7

A milk chocolate containing a fat having a melting point of 33^{o}C was fed into an ice-cream freezer. The chocolate was vigorously agitated for 3 minutes, with cooling and aeration, to give a chocolate containing numbers of fine bubbles and having an apparent relative density of 0.78 and a temperature of 25.5^{o}C. The chocolate was then passed into a chocolate shell that had been prepared by the method described in Example 3. The chocolate was then allowed to stand in a vacuum chamber kept at 46 Torr (6.1 kPa) and at 20^{o}C to complete expansion, after which it was solidified at -20^{o}C. The aerochocolate thus produced had the apparent relative density of 0.38. The chocolate formed a fine granular conglomerate. It had a mild and creamy touch in the mouth and tasted delicious, as compared with a prior aerochocolate.

### Comparative Example

A chocolate containing cocoa butter only as the fat was fed into the cooling device described in Example 4, and then cooling and aeration were effected so that the apparent relative density of the chocolate became 1.08 and its temperature reached 30^{o}C. The chocolate was placed in a vacuum chamber kept at 30 Torr (4 kPa) and at 20^{o}C to complete the expansion and then solidified at -20^{o}C to give an aerochocolate. It had the apparent relative density of 0.80. As shown in Figure 2, it had such a texture that the chocolate formed the continuous phase in which the gas was dispersed discontinuously.

The aerochocolate obtainable according to this invention preferably has an apparent relative density of 0.23 to 0.48. The state of the gas and the chocolate is totally different from that of the prior aerochocolates. The solid phase is a conglomerate that consists of a fine granular chocolate.

Thus, the aerochocolates obtainable according to this invention give a very light feel and taste delicious just like fresh cream, in comparison with the prior aerochocolates.

This is considered to be due to the fact that the aerochocolates of this invention have a smaller apparent relative density and a larger proportion occupied by the gas as compared with the prior aerochocolates, so that the amount of chocolate eaten each time is smaller than that of prior aerochocolates.

The aerochocolates obtainable according to this invention have further advantages that they solidify without tempering and do not cause blooming, possibly because the gas is introduced by stirring with cooling.

## Claims

1. A process for manufacturing a confectionery product that comprises agitating molten chocolate while cooling it until its temperature is from 8 to 14^{o}C lower than the melting point of the fat contained in the chocolate and until its apparent relative density is from 1.1 to 0.7, with the inclusion of gas; and allowing the cooled chocolate to expand under a reduced pressure not exceeding 150 Torr, (20 kPa) thereby expanding it and forming gas and solid phases.

2. A confectionery product obtainable by a process as claimed in Claim 1.

3. A product as claimed in claim 2 having an apparent relative density of from 0.23 to 0.48.

## Patentansprüche

1. Verfahren zur Herstellung eines Süßwarenproduktes, bei dem man geschmolzene Schokolade unter Kühlen und unter Einschluß von Gas rührt, bis ihre Temperatur 8 bis 14 °C niedriger als der Schmelzpunkt des in der Schokolade enthaltenen Fettes ist und bis die scheinbare relative Dichte 1,1 bis 0,7 beträgt, und die gekühlte Schokolade unter einem verminderten Druck, der 150 Torr (20 kPa) nicht übersteigt, expandieren läßt und so sie ausdehnt und eine Gasphase und feste Phase bildet.

2. Süßwarenprodukt, erhältlich nach einem Verfahren nach Anspruch 1.

3. Produkt nach Anspruch 2 mit einer scheinbaren relativen Dichte von 0,23 bis 0,48.

## Revendications

1. Procédé pour fabriquer un produit de confiserie qui comprend les phases consistant à agiter un chocolat fondu tandis qu'il est refroidi jusqu'à ce que sa température soit inférieure de 8 à 14°C au point de fusion de la graisse contenue dans le chocolat et jusqu'à ce que sa densité relative apparente soit comprise entre 1,1 et 0,7, le gaz inclus; et à permettre au chocolat refroidi de se dilater sous une pression réduite n'excédant pas 20 kPa (150 Torr), de manière à le dilater et à former des phases gazeuse et solide.

2. Produit de confiserie pouvant être obtenu par un procédé selon la revendication 1.

3. Produit selon la revendication 2 ayant une densité relative apparente comprise entre 0,23 et 0,48.
